# EUROPEAN PATENT APPLICATION

(11) **EP 1 571 284 A2**
(43) Date of publication of application: **07.09.2005**
(21) Application number: 05101538.6
(22) Date of filing: 01.03.2005
(51) Int. Cl.: E06B 7/23

(54) **Gasket particularly for doors or windows and/or glass faces**

(30) Priority: 02.03.2004 IT TV20040023
(71) Applicant: SOMEC S.r.l., 31020 Zoppe'di San Vendemiano TV (IT)
(72) Inventor: SOSSAI, Ermenegildo, 31010, MARENO DI PIAVE TV (IT)
(74) Representative: Modiano, Guido

(57) **Abstract**

A gasket (1) particularly for doors or windows and/or glass faces, comprising a deformable body (2), inside which there is at least one first closed cavity (3), and means (4) for the controlled pressurization of the cavity (3).

## Description

The present invention relates to a gasket particularly for doors or windows and/or glass faces.

The need to improve constantly the level of environmental comfort that can be achieved inside buildings, and the need to offer high protection against external atmospheric agents, such as cold air, water and wind, especially in locations where the climate is particularly rigid, or in highly aggressive environments such as the marine environment, has entailed the introduction, particularly in doors or windows of buildings and ships and in glass faces, of gaskets that can be interposed between the various elements that constitute them.

Known kinds of gasket are currently in use which have various shapes and have dimensions and materials that can vary according to the types of application for which they are designed.

These known gaskets are generally made of materials having high deformability and elasticity properties, so that they can be interposed even between elements that move with respect to each other, for example between the opening leaves and the fixed frame of a door or window, and withstand a large number of deformation cycles, induced by the opening and closure of said leaves or by their sliding on the frame.

For example, materials such as plastomers, thermoplastic elastomers or vulcanizable elastomers are widely used in this field.

In order to achieve high sealing against atmospheric agents for the door or window on which they are installed, these known types of gasket are often compressed intensely by the elements between which they are interposed, and are thus subjected to very substantial deformations.

Within certain limits, in fact, there is a direct proportionality between the force with which, for example, a leaf is fastened against a door or window frame, between which a gasket has been interposed, and the capacity to hinder the infiltrations of atmospheric agents such as cold air or water, and therefore a known solution that is used currently to cope with severe climate conditions consists in increasing, within the allowable limits, the clamping force between the various elements of the door or window.

The main drawback of these known kinds of gasket is that the materials used to manufacture them tend to lose their elasticity characteristics over time and as the deformation cycles accumulate, offering a seal that gradually tends to be less effective.

Another drawback of known types is that the materials of which they are made tend to lose their elasticity characteristics when they are at low temperatures, as can occur frequently in the winter period; moreover, the thermal cycles to which they are subjected due to the changing of the seasons and of the day and night accelerate the degradation of these materials.

Another drawback is that if a door or window is struck by a strong air current, for example in the presence of strong wind, said air can act so as to reduce the force with which two leaves are forced against each other or against a frame, or even cause a slight deformation thereof, thus reducing the compression of the gasket interposed between said elements and accordingly its insulation capacity.

The aim of the present invention is to solve the above-mentioned problems, eliminating the drawbacks of the cited background art, by providing a gasket that allows to obtain, for the doors or windows in which it is installed, an optimum insulation against atmospheric agents and noise, ensuring, for a very long period of operation, a high performance even in the presence of aggressive atmospheric agents.

Within this aim, an object of the invention is to provide a gasket that allows to ensure a high insulation performance even in the presence of intense stresses arising from air currents that are incident to the door or window or to the glass face in which it is installed.

Another object of the invention is to provide a gasket that provides a performance that can be adapted to the climate conditions of the outside environment.

Another object is to provide a gasket that is structurally simple and has low manufacturing costs.

This aim and these and other objects that will become better apparent hereinafter are achieved by a gasket particularly for doors or windows and/or glass faces, comprising a deformable body inside which there is at least one first closed cavity, characterized in that it comprises means for the controlled pressurization of said cavity.

Further characteristics and advantages of the invention will become better apparent from the following detailed description of a particular but not exclusive embodiment thereof, illustrated by way of non-limiting example in the accompanying drawings, wherein:
Figure 1 is a perspective view of a gasket according to the present invention;
Figure 2 is a transverse sectional view of a gasket;
Figure 3 is a transverse sectional view of a second embodiment of a gasket according to the invention, illustrated at rest;
Figure 4 is a transverse sectional view of the gasket of Figure 3, in pressurized conditions;
Figure 5 is a transverse sectional view of a third embodiment of the gasket according to the invention;
Figure 6 is a sectional view, taken along a longitudinal plane, of some alternative embodiments of the gasket according to the invention;

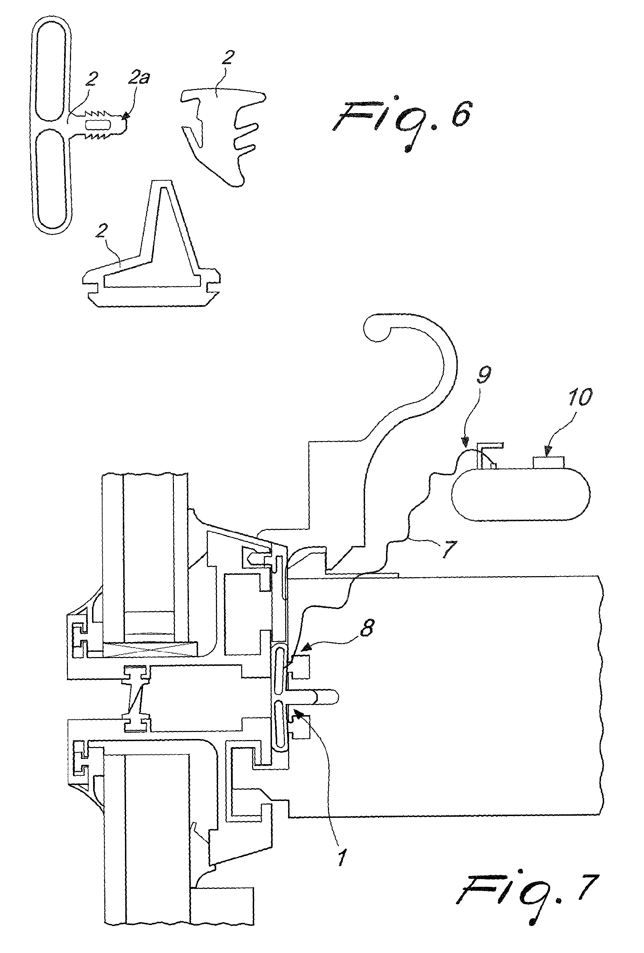

Figure 7 is a sectional view of a gasket according to the invention applied to a glass face;

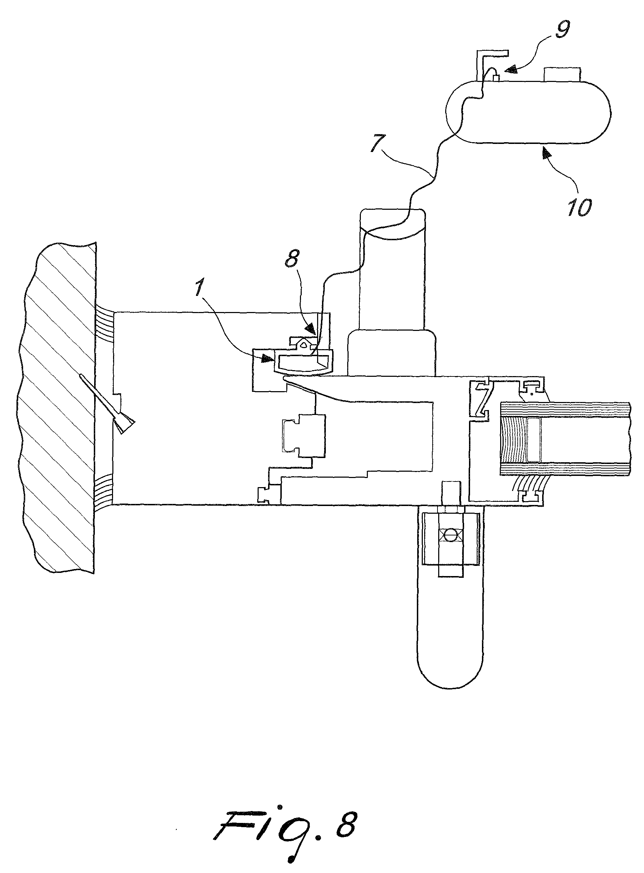

Figure 8 is a sectional view of a gasket according to the invention applied to a sliding door or window;

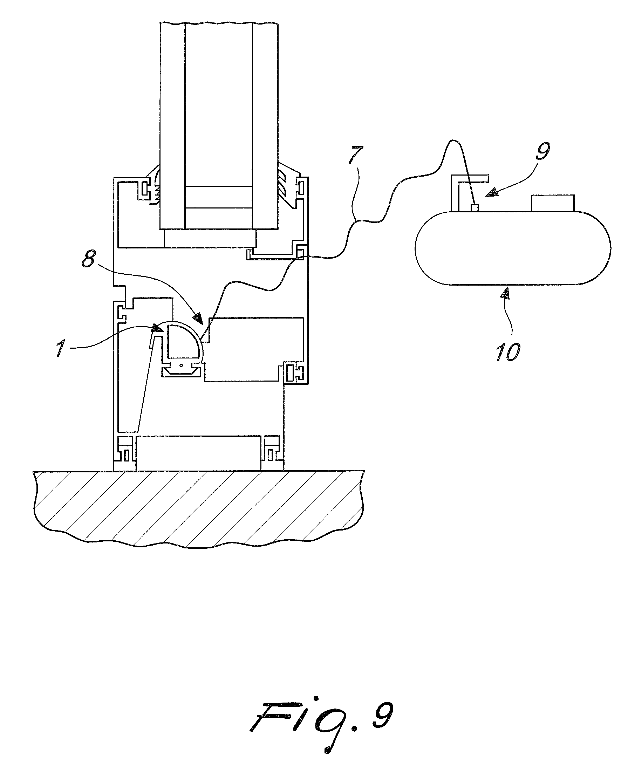

Figure 9 is a sectional view of a gasket according to the invention applied to an opening door or window.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

With reference to the figures, the reference numeral 1 generally designates a gasket, particularly for doors or windows, which is constituted by a deformable body 2 that is, when at rest, shaped approximately like an elongated parallelepiped.

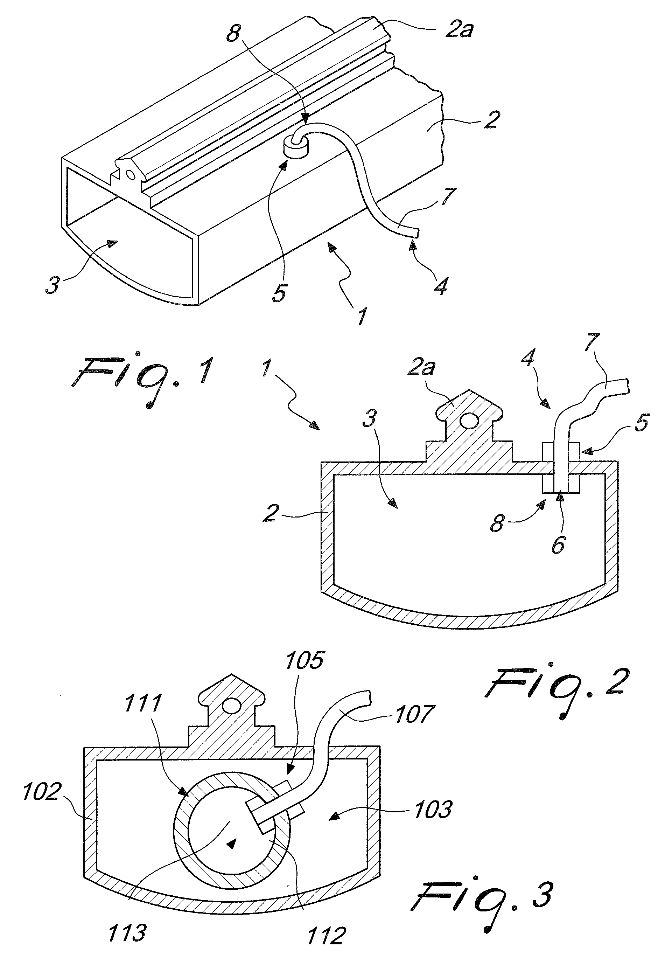

In the example shown in Figure 1, the rest cross-section of said deformable body, which can be solid or hollow, is approximately rectangular, with a curved side in which the convexity is directed outward, and is provided with a tab 2a for its connection to a supporting structure, for example a profiled element of a leaf or of a frame of a door or window.

The deformable body 2 can conveniently have, at rest, various other shapes, depending on the application for which the gasket 1 is developed, and may have variously shaped cross-sections, tabs and/or recesses, as currently done for known types of gasket, in order to allow to fix it to a door or window and allow it to interact with the structural elements of said door or window.

Advantageously, the deformable body 2 is made of a material that has high elastic properties.

At least one first closed cavity 3 is formed inside the deformable body 2 and contains air.

Said at least one first cavity can, for example, run longitudinally inside the deformable body 2, along part or all of its extension, and can be variously shaped and arranged inside it.

For example, the at least one first cavity can match the external profile of the cross-section of the deformable body 2, while the walls that form it can have a thickness that is uniform or variable or different for each wall.

The gasket 1 further comprises means 4 for the controlled pressurization of the first cavity 3, which are suitable to adjust the pressure of the air that is present inside said cavity.

Such means comprise, for example, at least one valve 5, which is inserted in at least one hole 6 formed in a wall of the deformable body 2, by means of which a first tube 7 can be connected, at a first end 8, to the inside of the at least one first cavity 3.

An air suction-compression device 10, for example of the electrically operated and regulated type, can be connected to a second end 9 of the first tube 7.

Conveniently, the suction-compression device 10 can be connected to one or more sensors, arranged in the external and internal environments separated by the door or window in which the gasket 1 is installed, for example capable of detecting the temperature, pressure, humidity of said environments and the speed of the air that is incident from outside on the door or window, and to an electronic control unit for processing the signals that arrive from said sensors.

A second embodiment of the gasket 101 provides for the insertion, inside the at least one first cavity 103, of an inflatable element 111, which is constituted for example by a second tube 112, which is provided internally with a second closed cavity 113 that is connected, by means of a valve 105 and a first tube 107, to an air suction-compression device.

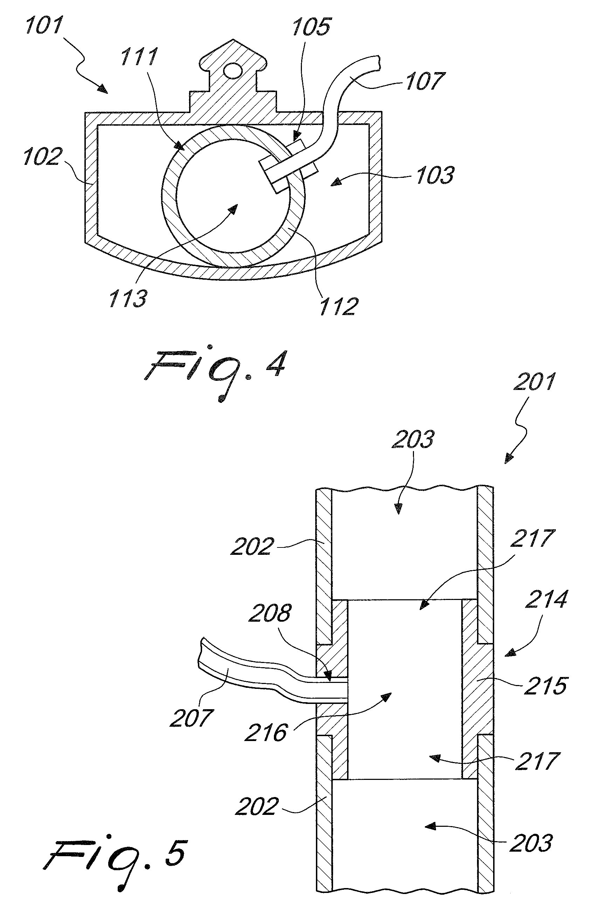

The second tube 112 has, at rest, a smaller cross-section than the first cavity 103, inside which it is contained, and it is therefore disconnected from the inside walls of the cavity, as shown in Figure 3.

If the pressure of the air contained inside the second cavity 113 is increased by means of the compression device, the inflatable element 111 can expand until it makes contact with the side walls of the first cavity 103, as shown in Figure 4, offering an additional resistance to any deformation imparted to the deformable body 102.

A third embodiment of the gasket 201 provides for the interposition, between two consecutively arranged deformable bodies 202, or between the two opposite ends of a same deformable body, of a pressurization insert 214, which is constituted by a sleeve 215, which can be made for example of plastics, metallic material, rubber or of the same material as the deformable bodies 202 and is provided internally with a third cavity 216, which is open at two opposite ends 217 of the sleeve.

The sleeve 215 can be inserted partially, at its opposite ends 217, within each one of the two deformable bodies 202 or the two opposite ends of a same deformable body, so that the third cavity 216 connects the two first cavities 203 of the deformable bodies or the two ends of the first cavity of the deformable body.

Further, a first tube 207 is connected, at a first end 208, to the third cavity 216, and a second end of the tube can be connected to an air compression device.

The operation of the gasket according to the invention, once installed in a door or window or glass face applied to a wall of a building or of a marine vehicle, entails that the suction-compression device adjusts, according to the values received from the sensors connected thereto and related to the inside and outside environments of the door or window on which the gasket according to the invention is installed, the pressure of the air contained inside the at least one cavity or in the second tube provided within the insulation body, so that said body is forced with the chosen force against the elements of the door or window with which it is in contact.

This compression of the deformable body against the elements of the door or window achieves an excellent performance of said deformable body in terms of insulation from external atmospheric agents.

The gasket can offer automatically, by way of the continuous sensing of the exact atmospheric conditions, a seal against infiltrations of air or water that is adequate for the needs that actually occur in each instant.

In particular, the gasket according to the invention is very effective if the door or window or glass face is struck by a stream of air that is incident thereto, for example in the presence of strong winds, and acts so as to move mutually apart the elements that constitute it, for example move the leaves away from the frame.

This condition can lead, when using known types of gasket, to a reduction in the force with which they are compressed and therefore to greater permeability of the door or window with respect to external atmospheric agents.

The gasket according to the invention can instead be pressurized further, by way of the automatic intervention of the compression device, so as to compensate for the deformation of the door or window and keep unchanged its insulation performance, even in the presence of strong winds that are incident thereto.

By way of these properties, the gasket according to the invention is particularly suitable for naval doors or windows, which are continuously exposed to particularly hostile climates, or for civil doors or windows, for which an ever-increasing level of comfort is required.

It has thus been found that the invention has achieved the intended aim and objects, a gasket particularly for doors or windows having been provided which allows to obtain, for the doors or windows in which it is installed, an optimum insulation against atmospheric agents and noise, ensuring, for a long period of operation, a high performance also in the presence of aggressive atmospheric agents.

Another object achieved by the invention is to ensure high insulation performance even in the presence of intense stresses arising from air currents that are incident to the door or window or glass face in which it is installed.

Another object that is achieved by the present invention is to provide a performance that can be adapted to the climate conditions of the outside environment.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The characteristics that are referenced as advantageous, convenient or the like may also be omitted or be replaced with equivalents.

The disclosures in Italian Patent Application No. TV2004A000023 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A gasket particularly for doors or windows and/or glass faces, comprising a deformable body inside which there is at least one first closed cavity, **characterized in that** it comprises means for the controlled pressurization of said cavity.

2. The gasket according to claim 1, **characterized in that** said deformable body is made of a material having high elastic properties.

3. The gasket according to claims 1 and 2, **characterized in that** said at least one first cavity runs longitudinally inside said deformable body along part or all of the extension thereof, and is variously shaped and arranged inside it.

4. The gasket according to claims 1 and 3, **characterized in that** said at least one first cavity matches the external profile of the cross-section of said deformable body, the walls that form it having a thickness that is uniform or variable or different in each wall.

5. The gasket according to claims 1 and 4, **characterized in that** said means for the controlled pressurization of said cavity comprise at least one valve, which is inserted in at least one hole formed in a wall of said deformable body, by means of which a first tube is connected, at a first end, to the inside of said at least one first cavity.

6. The gasket according to claims 1 and 4, **characterized in that** an inflatable element is accommodated inside said at least one first cavity and is constituted by a second tube that is provided internally with a second closed cavity, which is connected by means of said valve to said first end of said first tube.

7. The gasket according to claims 1 and 6, **characterized in that** said second tube has, at rest, a smaller cross-section than said first cavity, inside which it is contained, and is disconnected from the internal walls of said first cavity.

8. The gasket according to claims 1 and 4, **characterized in that** it comprises a pressurization insert, which can be interposed between two deformable bodies that are arranged consecutively or between the opposite ends of a same said deformable body, which is constituted by a sleeve, which can be made of plastic material or metallic material or rubber or of the same material as said deformable bodies, and is provided internally with a third cavity, which is open at two opposite ends of said sleeve.

9. The gasket according to claims 1 and 8, **characterized in that** said sleeve can be inserted partially, at said opposite ends thereof, in each one of said two deformable bodies or inside the opposite ends of a same said deformable body, said third cavity connecting said first two cavities of said two deformable bodies or the opposite ends of said first cavity of said deformable body.

10. The gasket according to claims 1 and 9, **characterized in that** said first tube is connected to said third cavity at its said first end.

11. The gasket according to one or more of the preceding claims, **characterized in that** an air suction-compression device is connectable to a second end of said first tube, said air suction-compression device being of the type with electrical actuation and regulation.

12. The gasket according to claims 1 and 11, **characterized in that** said suction-compression device is connected to one or more said sensors, which are arranged in the external and internal environments separated by the door or window in which said gasket is installed, in order to detect the temperature, pressure and humidity of said environments and the speed of the air that is externally incident to said door or window, and to an electronic control unit for processing the signals that arrive from said sensors.

13. The gasket according to one or more of the preceding claims, **characterized in that** said deformable body has, at rest, a shape that is approximately parallelepipedal and longitudinally elongated.

14. The gasket according to one or more of the preceding claims,
**characterized in that** said deformable body has one or more variously shaped cross-sections and tabs and/or receptacles for fixing it to said door or window and for its interaction with the structural elements of said door or window.
